(19) **Europäisches Patentamt European Patent Office Office européen des brevets**

(11) **EP 3 775 522 B1**

(12) **EUROPEAN PATENT SPECIFICATION**

(45) Date of publication and mention
of the grant of the patent:
**24.05.2023 Bulletin 2023/21**

(21) Application number: **19721780.5**

(22) Date of filing: **27.03.2019**

(51) International Patent Classification (IPC):
**F02D 41/14** (2006.01)　　**F02D 31/00** (2006.01)
**G05B 11/42** (2006.01)

(52) Cooperative Patent Classification (CPC):
**F02D 41/1401; F02D 31/001;** F02D 2041/1409;
F02D 2041/1422; F02D 2200/101;
F02D 2200/1012; G05B 11/42

(86) International application number:
**PCT/IB2019/052485**

(87) International publication number:
**WO 2019/186418 (03.10.2019 Gazette 2019/40)**

(54) **SPEED CONTROL METHOD FOR AN INTERNAL COMBUSTION ENGINE**

VERFAHREN ZUR DREHZAHLREGELUNG FÜR EINEN VERBRENNUNGSMOTOR

PROCÉDÉ DE COMMANDE DE VITESSE POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2018   IT 201800004003**

(43) Date of publication of application:
**17.02.2021   Bulletin 2021/07**

(73) Proprietor: **FPT Industrial S.p.A.**
**10156 Torino (IT)**

(72) Inventors:
• **CARO, Marcello**
**10045 Piossasco (TO) (IT)**

• **AIMAR, Bruno**
**12040 Margarita (CN) (IT)**
• **BRUCATO, Aldo**
**10043 Orbassano (TO) (IT)**

(74) Representative: **Bongiovanni, Simone et al**
**Studio Torta S.p.A.**
**Via Viotti, 9**
**10121 Torino (IT)**

(56) References cited:
WO-A1-2017/081658　　DE-A1-102014 001 226
DE-C1- 4 038 212　　FR-A1- 2 858 660
US-A- 5 251 598　　US-A1- 2013 113 408
US-A1- 2016 177 852　　US-B1- 6 343 235

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Cross-reference to related applications

This patent application claims priority from italian patent application no. 102018000004003 filed on 27/03/2018.

Technical field of the invention

The invention relates to the field of control methods to control the operating point of internal combustion engines.

State of the art

It is known that the accelerator pedal allows the driver to cause a variation in the rotation speed of the internal combustion engine.

This evidently is the consequence of a variation in a torque delivered by the internal combustion engine. Therefore, the accelerator pedal can relate to the operating engine point, namely engine speed/torque, of the internal combustion engine representing, with a relative inclination, a requested torque value or an objective speed of the engine.

The engine speed and the torque are evidently correlated with one another, but, nevertheless, a speed control implies very quick reactions of the internal combustion engine.

The speed control of the internal combustion engine is particularly delicate because of the intrinsic response delay of the engine due to different factors, among which there is the capacitive effect of the intake manifold, which has a slow dynamic.

During a gear shift or a manoeuvre or in case of a sudden insertion of a load, such as a pump or a vehicle compressor, or a sudden change in the slope of the road, the speed control must deliver a response with utmost quickness and precision.

A speed control scheme is based on the fact of calculating a speed error relative to a reference value and of consequently calculating the necessary control variable (the torque) of the controlled system, so as to change the response of the internal combustion engine, in order to reduce or eliminate said error. This evidently is a feedback control.

The typical controller used by the prior art in order to control the speed of the engine is a PI (proportional, integral) controller. In other words, the error between a reference value and the measured or estimated value of the output of the system is corrected through a proportional controller and an integral controller, which, based on said error, generate respective control signals. The sum of the respective outputs, i.e. of the respective generated control signals, is applied to the input of the system so as to cause the output of the system to converge towards the reference value, which, in this specific case, is an engine speed reference.

Using a derivative contribution, thus creating a complete PID, would be extremely advantageous, since the derivative contribution allows for a more immediate response to quick variations of the load and, in general, to external interferences.

A complete PID controller requires the outputs of the P, I and D controllers to be added and the result is applied to the input of the system to be controlled.

The derivative term is an advancing control component, which typically introduces high-frequency dynamics in the system, thus making the controller unstable.

For this reason, the derivative contribution is not usually adopted.

According to a first control scheme, which is aimed at limiting over- and underelongations (under/overshoots) of the system, which are typically due to the integral term, technically known as "anti-windup", the response of the integral contribution is saturated.

According to a second control scheme, which is aimed at limiting over- and underelongations, the integral term can be set to zero (reset) as a function of the sign change of the error, with the result that the internal combustion engine assumes an edgy and unpredictable behaviour.

FR2858660A1 discloses the correction of the integral term as a function of speed error and of the speed derivative.

Summary of the invention

The object of the invention is to provide a control method to control an internal combustion engine, which allows for the implementation of a quick speed control, but, at the same time, is stable and fluid.

The idea on which the invention is based in that of providing a feedback control by means of a PI controller, wherein the derivative contribution is not added to the other contributions, but intervenes in order to change an operating parameter of the integral controller.

In particular, the integral controller comprises a saturator, which saturates the control signal towards the internal combustion engine based on a speed error and based on the derivative of the speed of the internal combustion engine.

With regard to the correlation between the integral controller and the derivative controller, we can say that the first one is a function of the second one, besides being a function of the speed error.

The derivative contribution responds much more quickly than the proportional and integral contributions, but its contribution is used to intervene upon the integrative contribution, minimizing the over- and underelongations of the response of the internal combustion engine, without jeopardizing the stability thereof.

The claims describe preferred embodiments of the invention, thus forming an integral part of the description.

Brief description of the figures

Further objects and advantages of the invention will be best understood upon perusal of the following detailed description of an embodiment thereof (and of relative variants) with reference to the accompanying drawings merely showing non-limiting examples, wherein:

figure 1 shows an example of control diagram based on the invention;
figure 2 shows, in detail, a block of the control diagram of figure 1.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

Detailed description of embodiments

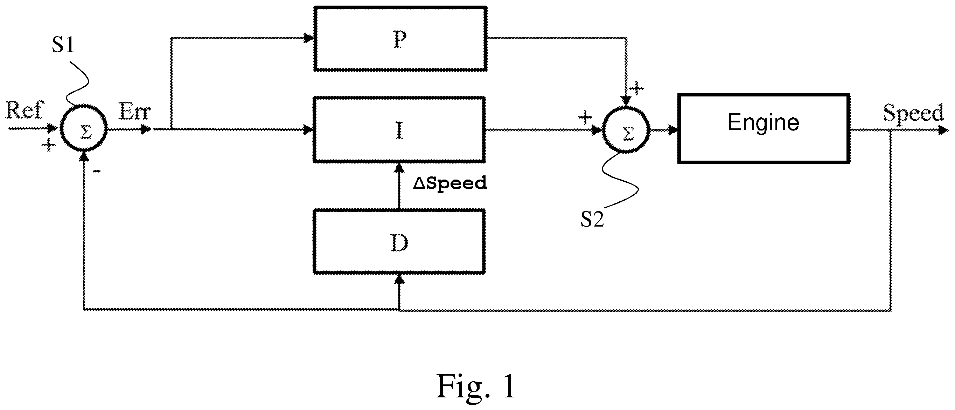

Figure 1 shows an example of control with a block diagram.

The control is carried out in a recursive manner with a discrete time, according to the operating frequency of the processing unit controlling the internal combustion engine. The internal combustion engine is represented, in figure 1, with the block called "Engine".

A revolution sensor, for example a phonic wheel applied to the drive shaft, allows the speed "Speed" of the internal combustion engine to be measured.

Furthermore, the accelerator pedal or any other vehicle device used to set a reference speed, such as for example a robotic transmission or a power takeoff, generates the reference signal Ref in terms of objective speed of the engine.

The measured speed Speed is subtracted from the objective speed Reg, thus generating an error Err by means of the first adder node S1 on the left in figure 1.

The same error value is brought to the input of blocks P, I, thus creating a PI control.

The outputs of the controllers P and I converge in the adder node S2 on the right in figure 1 so as to directly control the input of the internal combustion engine Engine. The controllers generally receive, at the input, speed signals and generate control signals concerning the percentage of torque to be delivered by the engine, relative to the nominal torque.

The controller D receives, as an input, the measured speed Speed and the relative output, namely the derivative ΔSpeed of the measured speed, is brought the to input of the block representing the integral control I.

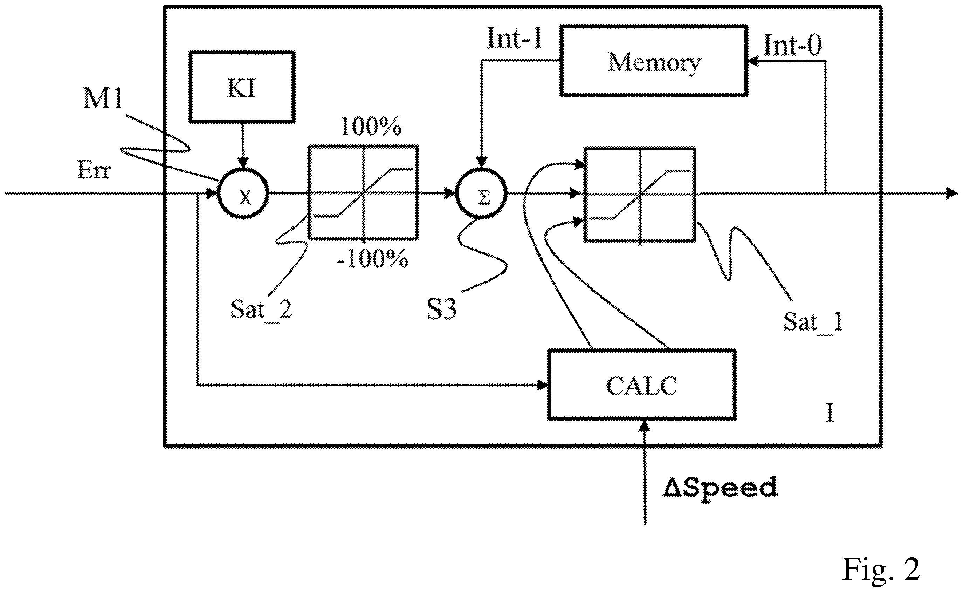

According to the invention, the derivative controller D helps control a saturator Sat_1 with reference to figure 2, which limits the contribution of the integral controller. Therefore, the integrative contribution is saturated according to a function F(Err, ΔSpeed) of the speed error Err and of the speed derivative.

According to figure 2, the saturation block Sat_1 is included in the integrative loop.

An integral controller I (with discrete time), according to a preferred variant of the invention, can be represented as a memory "Memory" containing a value Int-1 generated by the integral controller I itself at the preceding step (hence, "Int-1" indicates that it is generated at step "-1"), to which, in a iterative manner, by means of the adder node S3, the current value of the speed error Err is added, which is properly multiplied by the integrative coefficient KI, by means of the multiplier node M1. The result of the addition carried out by the adder node S3 represents the output of the integrative controller I, i.e. the aforesaid control signal, and, at the same time, the input Int-0 of the memory Memory (i.e. at the current step "0"), which stores it for the following integration step.

The saturator Sat_1, according to the invention, is arranged between the adder node S3 and the input of the memory Memory, which represents the output of the integrative controller, so that the limitation is operated not only on the output of the integrative controller, but also on the input of the "Memory" contained in it. FR2858660 shows the weighing of the input of the integrative block, but it does not show any interaction between the variable speed error and derivative of the speed in the operation of the block itself.. It is no coincidence that, according to figure 1 of the invention, the integral block I has two inputs, whereas the integral block of FR2858660 has one single input, as the input variable is manipulated on the outside of the integral block itself. The result evidently is different.

According to a preferred variant of the invention, the saturator Sat_1 carries out a symmetrical saturation relative to zero and the module of the saturation is given by the following formula:

$$|Saturation| = |K * RadQ \{ [ exp ( - |Err| / A) ] * [ exp ( - |\Delta Speed| / B ) ] \}|$$

Wherein:

- RadQ represents the square root operator
- Exp represents the exponential operator
- |Err| represents the module of the speed error Err described above
- |ΔSpeed| represents the module of the engine speed derivative ΔSpeed
- K, A and B represent constant values.

The derivative of the engine speed can be expressed by means of Newton's equation:

$$\Delta Speed = Cost * [(Torque\ delivered\ by\ the\ engine) - (Resisting\ torque\ due\ to\ external\ loads)]$$

Wherein Cost usually is the reciprocal of the moment of inertia J of the internal combustion engine.

Said external loads include, for example, the slope of the road covered by the vehicle driven by the internal combustion engine or the resisting torque offered by an electric generator, a compressor, a pump.

The block CALC, based on the inputs

- Speed error Err
- Speed derivative ΔSpeed,

Applied the aforesaid formula, calculating the module of the saturation |Saturation|.

The block CALC has two outputs, each addressed to the two inputs: high and low of the saturator Sat_1.

A positive or negative saturation is applied only when the signs of Err and ΔSpeed are concordant, positive or negative, otherwise +/- 100% of the signal generated by the adder node S3 passes.

A second saturator Sat_2 is preferably arranged between the multiplier node M1 and the adder node S3, so as to limit the control signal to +100% and -100% of the so-called "authority of the actuator". The reasons for the implementation of the second saturator Sat_2 are known to a person skilled in the art and substantially have the aim of avoiding having to uselessly request a performance to the actuator (Engine) exceeding the relative nominal features. In this case, the actuator is the internal combustion engine Engine, which cannot deliver more than the relative nominal torque in the relative speed/nominal torque map. According to a preferred variant of the invention, the aforesaid formula is implemented in the block CALC by means of a look up table, with the advantage of a greater flexibility, as it allows the coefficients of the table itself to be changed, introducing differences of the aforesaid formula from the output, which better suit the specific internal combustion engine. Furthermore, the look up table allows for a reduction of the computing burden. Hereinafter there is an example of a look up table having, as inputs, |ΔSpeed| and |Err|.

| Saturation expressed in percentage terms. | | $\lvert\Delta Speed\rvert$ | | | | |
|---|---|---|---|---|---|---|
| | | 0 | 100 | 200 | 300 | 400 |
| $\lvert Err\rvert$ | 0 | 100 | 61 | 37 | 22 | 14 |
| | 60 | 74 | 45 | 27 | 17 | 10 |
| | 120 | 55 | 33 | 20 | 12 | 7 |
| | 180 | 41 | 25 | 15 | 9 | 6 |
| | 240 | 30 | 18 | 11 | 7 | 4 |

The values shown in the matrix, for example $5 \times 5$, shown in the previous table are the ones deemed to be ideal for an implementation of the invention. Nevertheless, they can be properly changed.

These values are positive when Err and $\Delta$Speed both have a positive sign, otherwise when Err and $\Delta$Speed both have a negative sign, each one of the values shown in the table is multiplied by "-1".

In other words, the saturator Sat_1 is symmetrical relative to zero and, when the signs are positive, this indicates that the high (positive) portion of the saturator is being manipulated (upper limitation), vice versa, when the signs are negative, this indicates that the low (negative) portion of the saturator is being limited (lower limitation).

This method can advantageously be implemented by means of an engine control unit ECU of the internal combustion engine, which processes the information concerning the engine speed and the pressing of the accelerator pedal or requests for revolutions made by other devices and consequently controls the internal combustion engine according to what described above.

This invention can be advantageously implemented by means of a computer program comprising coding means for carrying out one or more steps of the method, when the program is run on a computer. Therefore, the scope of protection is extended to said computer program and, furthermore, to means that can be read by a computer and comprise a recorded message, said means that can be read by a computer comprising program coding means for carrying out one or more steps of the method, when the program is run on a computer.

The non-limiting example described above can be subjected to variations.

When reading the description above, a skilled person can carry out the subject-matter of the invention without introducing further manufacturing details. The elements and features contained in the different preferred embodiments, drawings included, can be combined with one another, without for this reason going beyond the scope of protection of this patent application. The information contained in the part concerning the state of art only serves the purpose of better understanding the invention and does not represent a declaration of existence of the items described.

**Claims**

1. Control method of an internal combustion engine by means of a feedback control of the motor speed, based on an error (Err) of said motor speed, calculated between a reference value (Ref) and a measured value (Speed) of the speed, in which said control comprises a proportional contribution (P) and an integral contribution (I), the method comprising a step of saturating said integral contribution by means of a saturating function (F(Err, $\Delta$Speed)) as a function (F (Err, $\Delta$Speed)) of:

   - a derivative ($\Delta$Speed) of said measured speed value (Speed) of the motor and of
   - said speed error (Err).

2. Method according to claim 1, wherein said saturation step is applied when a first sign of said derivative and a second sign of said speed error are concordant: positive/positive or negative/negative.

3. Method according to claim 2, wherein said integrative contribution (I) consists of the sum (S3) of

   - an error value (Err) calculated at the current step, multiplied by an additional coefficient (KI) and
   - a value of the integrative contribution (Int-1) generated at the immediately preceding step,

   and wherein said saturator (Sat_1) is applied to said sum.

4. Method according to one of the claims 1 - 3, in which an absolute value of said saturation is given by the following

formula:

$$|Saturation| = |K * RadQ \{ [ exp ( - |Err| / A) ] * [ exp ( - |\Delta Speed| / B ) ] \}|$$

Where is it:

    - RadQ represents the square root operator
    - Exp represents the exponential operator
    - |Err| represents the speed error module Err described above
    - |$\Delta$Speed| represents the module of the motor speed derivative $\Delta$Speed.
    - K, A and B represent constant values.

**5.** Method according to claim 4, wherein absolute values of said saturation calculated by means of the aforesaid formula are mapped in a Look up table.

**6.** Internal combustion engine including

    - a device for measuring a relative speed,
    - a processing unit (ECU) configured to control said internal combustion engine on the basis of a speed reference signal (Ref),

said processing unit being configured to perform the control method according to any of the previous claims from 1 to 5.

**7.** Vehicle or fixed installation comprising the internal combustion engine according to claim **6.**

**8.** Computer program comprising program encoding means suitable for carrying out all steps of any one of claims 1 to 5, when said program is run on the processing unit (ECU) of the internal combustion engine of claim 6.

**9.** Computer-readable means comprising a recorded program, said computer-readable means comprising program-coding means adapted to perform all steps of any one of claims 1 to 5, when said program is run on the processing unit (ECU) of the internal combustion engine of claim 6.

**Patentansprüche**

**1.** Steuerverfahren für eine Brennkraftmaschine mittels einer Rückkopplungssteuerung der Kraftmaschinendrehzahl auf der Basis eines Fehlers (Err) der Kraftmaschinendrehzahl, der zwischen einem Referenzwert (Ref) und einem Messwert (Speed) der Drehzahl berechnet wird, wobei die Steuerung einen proportionalen Anteil (P) und einen integralen Anteil (I) umfasst, wobei das Verfahren einen Schritt zum Sättigen des integralen Anteils mittels einer Sättigungsfunktion (F(Err, DSpeed)) als eine Funktion (F(Err, DSpeed)) der folgenden Größen umfasst:

    - Ableitung (DSpeed) des gemessenen Drehzahlwerts (Speed) der Brennkraftmaschine und
    - Drehzahlfehler (Err).

**2.** Verfahren nach Anspruch 1, wobei der Sättigungsschritt angewendet wird, wenn ein erstes Vorzeichen der Ableitung und ein zweites Vorzeichen des Drehzahlfehlers konkordant sind:

    positiv/positiv oder negativ/negativ.

**3.** Verfahren nach Anspruch 2, wobei der integrative Anteil (I) aus der Summe (S3) der folgenden Größen besteht:

    - Fehlerwert (Err), der im aktuellen Schritt berechnet wird, der mit einem zusätzlichen Koeffizienten (KI) multipliziert wird, und
    - Wert des integrativen Anteils (Int-1), der beim unmittelbar vorausgehenden Schritt erzeugt wird,

wobei die Sättigung (Sat_1) auf die Summe angewendet wird.

**4.** Verfahren nach einem der Ansprüche 1-3, wobei ein Absolutwert der Sättigung durch die folgende Formel gegeben ist:

$$|\text{Saturation}| = |K \times \text{RadQ} \{ [ \exp ( - |\text{Err}| / A) ] \times [ \exp (- |\text{DSpeed}| / B ) ] \}|$$

wobei:

- RadQ den Quadratwurzeloperator repräsentiert,
- exp den Exponentialoperator repräsentiert,
- |Err| das zuvor beschriebene Drehzahlfehlermodul Err repräsentiert,
- |DSpeed| das Modul der Ableitung DSpeed der Kraftmaschinendrehzahl repräsentiert,
- K, A und B konstante Werte repräsentieren.

**5.** Verfahren nach Anspruch 4, wobei Absolutwerte der Sättigung, die mittels der zuvor genannten Formel berechnet werden, in einer Nachschlagetabelle erfasst werden.

**6.** Brennkraftmaschine, die Folgendes umfasst:

- eine Vorrichtung zum Messen einer relativen Drehzahl;
- eine Verarbeitungseinheit (ECU), die konfiguriert ist, die Brennkraftmaschine auf der Basis eines Drehzahlreferenzsignals (Ref) zu steuern,

wobei die Verarbeitungseinheit konfiguriert ist, das Steuerverfahren nach einem der vorhergehenden Ansprüche 1 bis 5 auszuführen.

**7.** Fahrzeug oder feststehende Installation, die die Brennkraftmaschine nach Anspruch 6 umfasst.

**8.** Computerprogramm, das Programmcodierungsmittel umfasst, die alle Schritte nach einem der Ansprüche 1 bis 5 ausführen können, wenn das Programm auf der Verarbeitungseinheit (ECU) der Brennkraftmaschine nach Anspruch 6 läuft.

**9.** Computerlesbare Mittel, die ein aufgezeichnetes Programm umfassen, wobei die computerlesbaren Mittel Programmcodierungsmittel umfassen, die ausgelegt sind, alle Schritte nach einem der Ansprüche 1 bis 5 auszuführen, wenn das Programm auf der Verarbeitungseinheit (ECU) der Brennkraftmaschine nach Anspruch 6 läuft.

**Revendications**

**1.** Procédé de commande d'un moteur à combustion interne au moyen d'une commande de rétroaction de la vitesse de moteur, sur la base d'une erreur (Err) de ladite vitesse de moteur, calculée entre une valeur de référence (Ref) et une valeur mesurée (Vitesse) de la vitesse, dans lequel ladite commande comprend une contribution proportionnelle (P) et une contribution intégrale (I), le procédé comprenant une étape de saturation de ladite contribution intégrale au moyen d'une fonction de saturation (F(Err, ΔVitesse)) en fonction (F (Err, ΔVitesse)) de :

- une dérivée (ΔVitesse) de ladite valeur de vitesse mesurée (Vitesse) du moteur et de
- ladite erreur de vitesse (Err).

**2.** Procédé selon la revendication 1, dans lequel ladite étape de saturation est appliquée lorsqu'un premier signe de ladite dérivée et un second signe de ladite erreur de vitesse sont concordants : positif/positif ou négatif/négatif.

**3.** Procédé selon la revendication 2, dans lequel ladite contribution intégrative (I) est constituée de la somme (S3) de

- une valeur d'erreur (Err) calculée à l'étape courante, multipliée par un coefficient additionnel (KI) et
- une valeur de la contribution intégrative (Int-1) générée à l'étape immédiatement précédente,

et dans lequel ledit saturateur (Sat_1) est appliqué à ladite somme.

4. Procédé selon l'une des revendications 1 à 3, dans lequel une valeur absolue de ladite saturation est donnée par la formule suivante :

$$|\text{Saturation}| = |K * \text{RadQ} \{ [ \exp ( - |\text{Err}| / A) ] * [ \exp ( - |\Delta\text{Vitesse}| / B ) ] \}|$$

Où :

- RadQ représente l'opérateur de racine carrée
- Exp représente l'opérateur exponentiel
- |Err| représente le module d'erreur de vitesse Err décrit ci-dessus
- |ΔVitesse| représente le module de la dérivée de la vitesse de moteur ΔVitesse.
- K, A et B représentent des valeurs constantes.

5. Procédé selon la revendication 4, dans lequel les valeurs absolues de ladite saturation calculée au moyen de ladite formule mentionnée ci-dessus sont mises en correspondance dans une table de correspondance.

6. Moteur à combustion interne comportant

- un dispositif pour mesurer une vitesse relative,
- une unité de traitement (ECU) configurée pour commander ledit moteur à combustion interne sur la base d'un signal de référence de vitesse (Ref),

ladite unité de traitement étant configurée pour effectuer le procédé de commande selon l'une quelconque des revendications 1 à 5 précédentes.

7. Véhicule ou installation fixe comprenant le moteur à combustion interne selon la revendication 6.

8. Programme informatique comprenant un moyen de codage de programme approprié pour réaliser toutes les étapes selon l'une quelconque des revendications 1 à 5, lorsque ledit programme est exécuté sur l'unité de traitement (ECU) du moteur à combustion interne selon la revendication 6.

9. Moyen lisible par ordinateur comprenant un programme enregistré, ledit moyen lisible par ordinateur comprenant un moyen de codage de programme adapté pour effectuer toutes les étapes selon l'une quelconque des revendications 1 à 5, lorsque ledit programme est exécuté sur l'unité de traitement (ECU) du moteur à combustion interne selon la revendication 6.

Fig. 1

Int-0

Memory

Sat_1

Int-1

CALC

ΔSpeed

Σ

S3

100%

-100%

Sat_2

KI

×

M1

Err

I

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102018000004003
- FR 2858660 A1

- FR 2858660